# FASCICULE DE BREVET EUROPEEN

(11) **EP 3 333 745 B1**
(45) Date de publication et mention de la délivrance du brevet: **14.08.2019**
(21) Numéro de dépôt: 17206236.6
(22) Date de dépôt: 08.12.2017
(51) Int. Cl.: G06F 21/55, G06F 21/60

(54) **DISPOSITIF DE GESTION DES DROITS D'ACCÈS D'UTILISATEURS À BASE DE RÔLES ET PROCÉDÉ DE GESTION ASSOCIÉ**
VORRICHTUNG ZUR VERWALTUNG DER ZUGANGSRECHTE VON BENUTZERN AUF DER BASIS VON ROLLEN, UND ENTSPRECHENDES VERWALTUNGSVERFAHREN
DEVICE FOR MANAGING USERS ACCESS RIGHTS BASED ON ROLES AND ASSOCIATED MANAGING METHOD

(30) Priorité: 09.12.2016 FR 1601756
(43) Date de publication de la demande: 13.06.2018
(73) Titulaire: Thales, 92400 Courbevoie (FR)
(72) Inventeur: GUYOMARC'H, Jean, 91767 Palaiseau (FR); LACROIX, Jean-Marc, 92622 Gennevilliers Cedex (FR); THIERRY, Philippe, 91767 Palaiseau Cedex (FR); GUILLOU, Erwan, 92622 Gennevilliers Cedex (FR)
(74) Mandataire: Lavoix

(56) Documents cités:
- CONTI M ET AL: "CRÃ PE: A System for Enforcing Fine-Grained Context-Related Policies on Android", IEEE TRANSACTIONS ON INFORMATION FORENSICS AND SECURITY, IEEE, PISCATAWAY, NJ, US, vol. 7, no. 5, 1 octobre 2012 (2012-10-01) , pages 1426-1438, XP011470251, ISSN: 1556-6013, DOI: 10.1109/TIFS.2012.2204249
- Thorsten Schreiber: "Android Binder Android Interprocess Communication", Seminarthesis of Uni. Bochum (RUB) - Chiar Network and Data Security, 5 octobre 2011 (2011-10-05), pages 1-34, XP055099704, Extrait de l'Internet: URL:http://www.nds.rub.de/media/attachment s/files/2012/03/binder.pdf [extrait le 2014-01-31]
- ET AL: "Context-aware Dynamic Access Control for Pervasive Applications", , 1 janvier 2004 (2004-01-01), XP055002894, Extrait de l'Internet: URL:http://citeseerx.ist.psu.edu/viewdoc/d ownload?doi=10.1.1.6.1258&rep=rep1&type=pd f [extrait le 2011-07-15]
- AMIYA K MAJI ET AL: "An empirical study of the robustness of Inter-component Communication in Android", DEPENDABLE SYSTEMS AND NETWORKS (DSN), 2012 42ND ANNUAL IEEE/IFIP INTERNATIONAL CONFERENCE ON, IEEE, 25 juin 2012 (2012-06-25), pages 1-12, XP032220340, DOI: 10.1109/DSN.2012.6263963 ISBN: 978-1-4673-1624-8

## Description

La présente invention concerne un dispositif de gestion des droits d'accès d'utilisateurs à base de rôles.

Dans le domaine informatique, il est connu des modèles de gestion des droits d'accès d'utilisateurs.

Un modèle de gestion des droits d'accès d'utilisateurs permet, par exemple, de gérer les droits d'accès à des fichiers informatiques. A titre d'illustration, le système de gestion de fichiers d'un système d'exploitation permet, en pratique, d'attribuer différents droits, tels des droits d'accès, des droits de lecture ou des droits d'écriture à des utilisateurs en fonction de leur profil.

Plus généralement, le modèle de contrôle d'accès à base de rôles, également désigné en anglais par l'acronyme RBAC pour « Role-Based Access Control », permet de gérer des permissions attribuées à des utilisateurs d'un système informatique.

Le modèle de contrôle d'accès à base de rôles repose sur un ensemble de correspondances entre un rôle et une session.

Par l'expression « permission », il est entendu une action pouvant être exécutée par un utilisateur donné.

A titre d'exemple, l'accès à un fichier, la modification d'un fichier, l'exécution d'une application ou de certaines fonctionnalités d'une application sont autant de permissions susceptibles d'être attribuées à un utilisateur.

Par l'expression « rôle », il est entendu une catégorie permettant de regrouper un ensemble d'utilisateurs en fonction des mêmes permissions qui leur sont attribuées.

A titre d'exemple, des utilisateurs faisant partie d'une organisation, telle une entreprise ou une administration, sont susceptibles d'être regroupés par une autorité centrale sous un même rôle, l'autorité centrale étant, par exemple, une entité responsable de la planification hiérarchique d'une organisation.

Par l'expression « session », il est entendu l'ensemble de permissions effectives dont dispose un utilisateur à un instant donné. Les permissions d'un même utilisateur sont parfois définies de façon contextuelle. En d'autres termes, une session est définie comme l'activation d'un rôle à partir duquel un ensemble de permissions sont attribuées à un ou plusieurs utilisateurs à un instant donné.

A titre d'illustration, un exemple de contrôle d'accès à base de rôles est à présent présenté.

Il est considéré un hôpital au sein duquel est déployé un système d'information comprenant, notamment, une base de données des patients. La base de données des patients, partagée entre des médecins et des infirmières connectés en réseau, comprend pour chaque patient des informations médicales et des informations administratives.

Un premier rôle et un second rôle correspondant respectivement aux médecins et aux infirmières sont définis.

A chaque rôle est associé un ensemble de permissions.

Par exemple, les médecins formant la première catégorie ont accès à l'intégralité des informations contenues dans la base de données, tandis que les infirmières formant la seconde catégorie n'ont accès qu'aux informations administratives.

Un tel modèle de contrôle d'accès à base de rôles permet ainsi de limiter la surface d'attaque des composants logiciels dans la mesure où les actions pouvant être effectuées par les utilisateurs d'un rôle sont limitées.

Ainsi, à titre d'illustration, si le compte informatique d'une infirmière est compromis, c'est-à-dire, par exemple, parce qu'un attaquant extérieur est en mesure d'accéder aux fichiers et aux droits de l'infirmière, alors l'attaquant ne pourra pas accéder aux dossiers dont l'accès nécessite d'appartenir à un groupe plus privilégié que celui auquel appartient l'infirmière, tel que le groupe des médecins.

En outre, la rédaction, l'évolution et la maintenance d'une politique de sécurité sont grandement facilitées par l'attribution de rôles dont il est possible de vérifier la complétude et la cohérence au sein d'une organisation donnée.

Par « politique de sécurité », il est entendu l'application de règles internes à l'organisation, ou fixées par une réglementation, permettant d'attribuer des permissions à des catégories d'utilisateurs.

Il est également connu des modèles de contrôle d'accès à base de rôles dotés de fonctionnalités permettant d'accroître l'efficacité desdits modèles, notamment au regard de la rédaction, de l'évolution et de la maintenance d'une politique de sécurité.

De tels modèles sont notamment connus de l'article de Mauro Conti et al. intitulé « Crêpe : A System for Enforcing Fine-Grained Context-Related Policies Android » issu de la revue IEEE Transactions on Information Forensics and Security, volume 7, numéro 5 à la date du 12 octobre 2012.

En particulier, le standard INCITS 359-2004 (RBAC) relatif au modèle de contrôle d'accès à base de rôles édicté par l'institut de normalisation américaine prévoit une capacité d'héritage de rôles.

La capacité d'héritage de rôles définit une hiérarchie des rôles permettant de refléter la structure mise en place dans une organisation.

Pour reprendre l'exemple précédent, le premier rôle hérite du second rôle : toutes les permissions attribuées au second rôle sont alors également attribuées au premier rôle.

Une telle capacité d'héritage permet de considérablement simplifier la rédaction et l'évolution des différents rôles mis en place dans une organisation puisque, notamment, la modification des permissions d'un rôle est susceptible d'impacter certaines permissions d'un autre rôle lorsqu'il y a héritage entre lesdits rôles.

Dans le domaine informatique, et en particulier au niveau des systèmes d'exploitation, il est connu de distinguer la partie noyau, également désignée en anglais par l'expression « kernel », de la partie utilisateur, également désignée en anglais par l'expression « user land ».

Le noyau est propre à gérer les ressources physiques de l'ordinateur, tels que les disques ou les interfaces réseaux. Le noyau est également propre à permettre la communication entre les différents composants, à savoir le matériel et les applications logicielles installées.

Dans la présente description, le noyau est un espace protégé, notamment par des mécanismes matériels de type MMU, de l'anglais « memory management unit ». De fait, le noyau ne doit pas être compromis par des logiciels malfaisants, également appelés en anglais « malwares », de nature à affecter les utilisateurs.

En d'autres termes, un tel noyau est protégé d'attaques malveillantes quand bien même le système d'exploitation et des composants logiciels, c'est-à-dire plus généralement la partie utilisateur, seraient compromis.

La partie utilisateur comprend un ensemble d'applications logicielles, également appelées applicatifs, accessibles par l'utilisateur. En outre, les utilisateurs sont isolés les uns des autres de sorte à ne pas influencer le noyau.

Il n'existe pas de mises en oeuvre connues de procédés permettant d'implémenter en mode noyau un modèle de contrôle d'accès à base de rôles doté d'une capacité d'héritage, ce qui rend la rédaction, l'évolution et la maintenance d'une politique de sécurité en mode noyau particulièrement lourdes et délicates.

En outre, les modèles de contrôle d'accès à base de rôles connus de l'état de la technique ne permettent pas la gestion d'éléments événementiels en mode noyau.

Par l'expression « élément événementiel », il est entendu la prise en compte, par exemple, de la date ou de l'heure dans l'application d'une permission donnée.

Ainsi, l'impossibilité d'implémenter en mode noyau un modèle de contrôle d'accès à base de rôles doté d'une capacité d'héritage ou assurant une gestion d'éléments événementiels conduit à une démultiplication des rôles et à une efficacité réduite.

Il existe donc un besoin de disposer d'un modèle de contrôle d'accès à base de rôles adapté pour être implémenté en mode noyau, dans lequel la définition de l'évolution et le contrôle de cohérence de la politique de sécurité sont facilités.

A cet effet, il est proposé un dispositif de gestion des droits d'accès d'utilisateurs à base de rôles, le dispositif comprenant une couche applicative comprenant des applications, un module d'interception d'événements propre à intercepter des événements, un registre mémorisant des données définissant au moins un rôle attribué à au moins un utilisateur du dispositif, chaque rôle déterminant un ensemble de permissions associées à au moins une application, le registre étant propre à être actualisé pour mise à jour de permissions associées à des applications et un module de décision propre à recevoir les événements interceptés par le module d'interception d'événements pour, en fonction des événements interceptés, actualiser le registre et générer une information d'actualisation. Le dispositif comprend une couche noyau distincte de la couche applicative et comprenant un module de pilotage, le module de pilotage étant propre à recevoir l'information d'actualisation et propre à lire le registre alors actualisé pour générer une liste de permissions lorsqu'une information d'actualisation est reçue, le dispositif comprenant, en outre, un module de gestion des permissions adapté pour recevoir une liste des permissions et pour appliquer les permissions de la liste des permissions lors de l'utilisation des applications par les utilisateurs.

Suivant des modes de réalisation particuliers, le dispositif de gestion des droits d'accès d'utilisateurs à base de rôles comprend une ou plusieurs des caractéristiques suivantes, prise(s) isolément ou suivant toutes les combinaisons techniquement possibles :
- le module de gestion des permissions est compris dans la couche applicative.
- le registre, pour chaque rôle, chaque application d'un ensemble d'applications est associée à au moins un ensemble de permissions.
- le registre comprend, pour au moins une application de l'ensemble d'applications dans au moins un rôle, une machine à états finis, chaque état correspondant à un ensemble de permissions.
- le module de décision est propre à actualiser le registre en effectuant au moins une transition entre états d'au moins une machine à états finis.
- dans le registre, à chaque instant et pour chaque rôle, un état pour chaque machine à états finis est fixé, la liste des permissions étant définie à partir de l'ensemble de permissions correspondant à un état fixé.
- un événement est choisi dans un groupe constitué du respect de critères temporels, d'un effacement d'urgence, d'une configuration de sécurité, d'un défaut d'intégrité, de la détection d'une intrusion, de la détection d'un virus, de la bande passante disponible, du nombre d'utilisateurs connectés, et de la valeur d'au moins une ressource d'un système informatique.
- la couche noyau est destinée à être mise en oeuvre par un noyau de système d'exploitation de type UNIX.
- le registre définit une politique de sécurité, la politique de sécurité vérifiant un test probatoire de complétude.

Il est également proposé un procédé de gestion des droits d'accès d'utilisateurs à base de rôles, le procédé étant mis en oeuvre par un dispositif informatique comprenant une couche applicative et une couche noyau distincte de la couche applicative, le procédé comprenant les étapes suivantes : interception d'un événement par un module d'interception d'événements compris dans la couche applicative, actualisation, par un module de décision compris dans la couche applicative, d'un registre également compris dans la couche applicative et génération d'une information d'actualisation, le registre mémorisant des données définissant au moins un rôle attribué à au moins un utilisateur du dispositif, chaque rôle déterminant un ensemble de permissions associées à au moins une application, le registre étant propre à être actualisé pour mise à jour de permissions associées à des applications. Lorsqu'une information d'actualisation a été générée à l'étape précédente, le procédé comporte une étape de réception de l'information d'actualisation par un module de pilotage compris dans la couche noyau, et lecture par le module de pilotage du registre alors actualisé pour génération d'une liste des permissions, et de réception de la liste des permissions par un module de gestion des permissions pour application des permissions de la liste des permissions.

D'autres caractéristiques et avantages de l'invention apparaîtront à la lecture de la description qui suit de modes de réalisation de l'invention, donnée à titre d'exemple uniquement et en référence aux dessins qui sont :
- figure 1, une vue schématique d'un exemple de système permettant la mise en oeuvre d'un contrôle de gestion des droits d'accès d'utilisateurs à base de rôles, et
- figure 2, une représentation schématique du dispositif de gestion des droits d'accès d'utilisateurs à base de rôles.

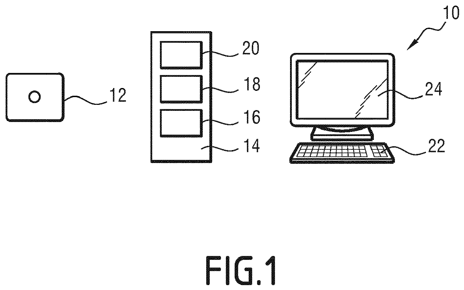

Un système 10 et un produit programme d'ordinateur 12 sont représentés sur la figure 1.

L'interaction du produit programme d'ordinateur 12 avec le système 10 permet de mettre en oeuvre un procédé.

Le système 10 est un ordinateur.

Plus généralement, le système 10 est un calculateur électronique propre à manipuler et/ou transformer des données représentées comme des quantités électroniques ou physiques dans des registres du système 10 et/ou des mémoires en d'autres données similaires correspondant à des données physiques dans des mémoires, des registres ou d'autres types de dispositifs d'affichage, de transmission ou de mémorisation.

Le système 10 comprend une unité de traitement de données 14 comprenant un processeur 16, des mémoires 18 et un lecteur 20 de support d'informations. Le système 10 comprend également un clavier 22 et une unité d'affichage 24.

Comme décrit précédemment, le système d'exploitation comprend un noyau et une partie utilisateur.

En particulier, le système 10 est un ordinateur doté d'un système d'exploitation de type UNIX. Dans ce cas, le noyau est un noyau de type UNIX.

D'une façon plus générale, le système d'exploitation et le noyau sont de type UNIX ou assimilé.

Le produit programme d'ordinateur 12 comprend un support lisible d'informations 20.

Un support lisible d'informations 20 est un support lisible par le système 10, usuellement par l'unité de traitement d'informations 14. Le support lisible d'informations 20 est un médium adapté à mémoriser des instructions électroniques et capables d'être couplé à un bus d'un système informatique.

A titre d'exemple, le support lisible d'informations 20 est un disque optique, un CD-ROM, un disque magnéto-optique, une mémoire ROM, une mémoire RAM, une mémoire EPROM, une mémoire EEPROM, une carte magnétique ou une carte optique.

Sur le support lisible d'informations 20 est mémorisé le programme comprenant des instructions de programme.

Le programme d'ordinateur est chargeable sur l'unité de traitement de données 14 et est adapté pour entraîner la mise en oeuvre d'un procédé de gestion des droits d'accès d'utilisateurs à base de rôle lorsque le programme d'ordinateur est mis en oeuvre sur le processeur 16.

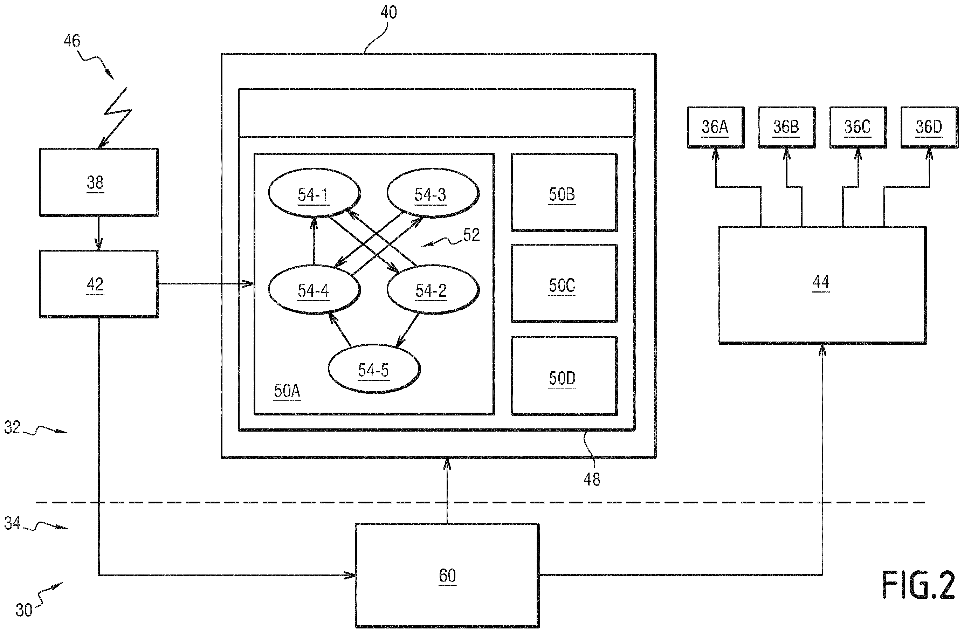

En référence à la figure 2, un dispositif 30 de gestion des droits d'accès d'utilisateurs à base de rôles est schématiquement représenté.

Le dispositif 30 est adapté pour mettre en oeuvre un modèle de contrôle d'accès à base de rôles.

Le dispositif 30 comprend une couche applicative 32 et une couche noyau 34 distincte de la couche applicative.

La couche applicative 32 est formée d'instructions logicielles propres à être mises en oeuvre par la partie utilisateur du système d'exploitation.

La couche noyau 34, également appelée couche système, est formée d'instructions logicielles constituant le noyau du système d'exploitation.

Alternativement, le code source du noyau du système d'exploitation est directement modifiable lors du déploiement du dispositif 30.

La couche applicative 32 comprend au moins une application logicielle, un module d'interception d'événements 38, un registre 40, un module de décision 42 et un module de gestion des permissions 44.

Le dispositif 30 comprend un nombre quelconque d'applications logicielles accessibles par les utilisateurs.

A chaque application est associé un ensemble de fonctions.

Les applications sont, par exemple, des outils de gestion d'une base de données, des applications de traitement de texte ou autres.

Sur la figure 2, il est représenté quatre applications logicielles 36A, 36B, 36C et 36D.

A titre d'exemple, dans l'exemple d'un hôpital au sein duquel est déployé un système d'information, une application est un outil de gestion de la base de données des patients. Dans ce cas, les fonctions associées à l'outil de gestion sont, par exemple, l'accès en lecture ou l'accès en écriture de certains types de données.

Le module d'interception d'événements 38 est propre à intercepter des événements. Lorsqu'un événement est intercepté, le module d'interception d'événements 38 est propre à retourner une donnée d'interception au module de décision 42 de sorte à permettre une gestion d'éléments événementiels.

Sur la figure 2, des événements sont représentés par des flèches 46.

Les événements 46 sont, par exemple, choisis dans la liste suivante :
- le respect de critères temporels, il s'agit, par exemple, de la date courante ou de l'heure courante du système d'information ;
- un effacement d'urgence, il s'agit, par exemple, d'un dysfonctionnement du système d'exploitation ou d'une application,
- une configuration de sécurité, il s'agit, par exemple, d'une règle de sécurité fixée, telle une connexion anormalement longue d'un utilisateur à une application donnée,
- un défaut d'intégrité, il s'agit, par exemple, d'une incohérence relevée dans l'application d'une règle de sécurité, telle l'utilisation de deux rôles par un même utilisateur ;
- la détection d'une intrusion, il s'agit, par exemple, de l'intrusion d'une personne externe à l'organisation ;
- la détection d'un virus ;
- la bande passante disponible, il s'agit, par exemple, de la surcharge du réseau informatique permettant la connexion simultanée des utilisateurs ;
- le nombre d'utilisateurs connectés, et
- la valeur d'au moins une ressource d'un système informatique, il s'agit, par exemple, de la charge du processeur ou l'atteinte d'une capacité mémoire.

A titre d'illustration, dans l'exemple d'un hôpital au sein duquel est déployé un système d'information, un événement est, par exemple, l'heure de connexion d'une infirmière à la base de données des patients.

Le registre 40 est propre à mémoriser des données définissant au moins un rôle attribué à au moins un utilisateur du dispositif 30, chaque rôle déterminant un ensemble de permissions associées à au moins une application.

Le registre 40 présente, par exemple, une structure associant, pour chaque rôle, chaque application à au moins un ensemble de permissions.

Dans le cas de la figure 2, un rôle 48 est représenté schématiquement sous forme d'un cadre. Comme visible sur cette figure, au sein du rôle 48, quatre ensembles de permissions 50A, 50B, 50C et 50D correspondant respectivement aux quatre applications 36A, 36B, 36C et 36D sont illustrés.

Les ensembles de permissions comprennent notamment des données tenant compte des événements 46 interceptés par le module d'interception d'événements 38.

A titre d'exemple, il est considéré que le rôle 48 correspond au rôle attribué aux infirmières. Dans ce cas, un premier ensemble de permissions 50A définit les permissions attribuées aux infirmières relativement à l'outil de gestion de la base de données des patients, et les trois autres ensembles de permissions 50B, 50C et 50D définissent les permissions attribuées aux infirmières relativement à trois autres applications. Le premier ensemble de permissions 50A contient notamment des données indiquant que les infirmières ne peuvent pas consulter les informations médicales des patients.

De préférence, le registre 40 comprend, pour chaque application de l'ensemble d'applications dans au moins un rôle, une machine à états finis, chaque état correspondant à un ensemble de permissions. Par exemple, l'ensemble de permissions 50A correspondant à l'application 36A comprend une machine à états finis.

Une machine à états finis, également appelée automate à états finis, est une construction présentant un nombre fini d'états et dans laquelle, à un instant donné, un seul état à la fois est possible. On parle alors d'état courant ou d'état figé. Le passage d'un état à un autre est régi par un événement et est appelé une transition. Une machine à états finis est définie par l'ensemble de ses états et par les conditions des transitions.

Dans ce cas, pour une application donnée, une transition entre deux états finis permet de modifier l'ensemble de permissions à appliquer.

Les machines à états sont définies à partir de la rédaction de politique de sécurité dont l'évolution ou la maintenance impacte les machines à états.

A titre d'illustration et en référence à la figure 2, dans l'exemple de l'hôpital dans lequel le premier ensemble de permissions 50A définit les permissions attribuées aux infirmières relativement à l'outil de gestion de la base de données des patients, le premier ensemble de permissions 50A est représenté sous la forme d'une machine à états finis 52 comprenant cinq états 54-1, 54-2, 54-3, 54-4 et 54-5.

L'état 54-1 correspond, par exemple, à la situation dans laquelle les infirmières ont accès aux données administratives de la base de données des patients.

L'état 54-2 correspond, par exemple, à la situation dans laquelle les infirmières n'ont pas accès à la base de données parce qu'elles sont en dehors de leur horaires de travail. Dans un tel cas, une transition est provoquée entre l'état 54-1 et l'état 54-2 par l'interception d'un événement temporel fixé par rapport auxdites horaires de travail.

Les autres états 54-3 et 54-4 correspondent à d'autres situations, telle l'impossibilité de modifier des données administratives d'un patient car d'autres infirmières sont en train de modifier les données dudit patient ou l'impossibilité d'accéder à la base de données car un logiciel malfaisant a été détecté dans le système d'information.

D'une façon générale, le registre 40 définit une politique de sécurité, ladite politique de sécurité étant alors décrite par les ensembles de permissions, de préférence au moyen de machines à états finis.

Les machines à états finis permettent d'apporter la preuve de la politique de sécurité. En cela, les machines à états finis sont de nature à constituer une preuve formelle de la politique de sécurité.

Dans certains modes de réalisation, la politique de sécurité vérifie un test probatoire de complétude.

Dans d'autres modes de réalisation, le test probatoire de complétude est propre à garantir l'intégrité dans le temps de la politique de sécurité.

Dans d'autres modes de réalisation, le test probatoire de complétude est complété par des tests permanents et réguliers.

Il est défini une signature électronique qui correspond à l'application d'une fonction mathématique cryptographique, non inversible, la fonction mathématique étant propre à identifier de manière unique un objet logiciel.

Le test probatoire est un test visant à effectuer une signature électronique de la politique de sécurité mise en place.

La signature électronique est sous le contrôle d'un officier de sécurité assermenté, dont le rôle fonctionnel est :
- d'assurer l'authenticité de ladite signature, et
- de révoquer des politiques déjà distribuées par le système 30.

Un agent externe, ayant la responsabilité de vérifier que ladite signature est compatible ou non avec l'implémentation des règles de sécurité attendues, garantit l'intégrité de la politique mise en oeuvre dans le système 30, de sorte à éviter le chargement de données corrompues ou malicieuses dans un système de sécurité, en particulier dans des systèmes de sécurité dit critiques.

Le module de décision 42 est propre à recevoir des événements interceptés par le module d'interception d'événements 38 pour, en fonction des événements 46 interceptés, générer une information d'actualisation et actualiser le registre 40.

L'information d'actualisation est transmise à destination d'un module de pilotage qui est décrit par la suite.

L'actualisation du registre 40 par le module de décision 42 consiste à modifier, pour au moins un rôle, au moins un ensemble de permissions correspondant audit rôle.

Lorsque la structure du registre 40 est telle que, pour chaque application, chaque ensemble de permissions comprend une machine à états finis, l'actualisation du registre consiste à effectuer des transitions entre états d'au moins une machine à états finis.

Dans ce cas, le module de décision 42 est propre à actualiser le registre 40 en effectuant au moins une transition entre états d'au moins une machine à états finis.

Dans l'exemple précédent, il est considéré que les infirmières ne travaillent pas après 18h00 et que, passé cet horaire, l'accès à la base de données des patients leur est interdit. Le module d'interception d'événements 38 intercepte alors un horaire qui est postérieur à 18h00 et retourne une donnée d'interception correspondante au module de décision 42. Le module de décision 42 effectue alors la transition de l'état 54-1 à l'état 54-2 de la machine à états finis 52.

Le module de gestion des permissions 44 est adapté pour recevoir une liste des permissions et pour appliquer les permissions de la liste des permissions. En d'autres termes, le module de gestion des permissions 44 est adapté pour établir une session en activant un rôle.

La liste de permissions comprend l'ensemble de toutes les permissions, pour chaque rôle et pour chaque application.

Dans le cas où le registre 40 comprend des machines à états finis, un état pour chaque machine à états finis est fixé à chaque instant et pour chaque rôle. Pour chacun des états fixés, l'ensemble des permissions correspondant audit état fixé permet de définir une partie de la liste des permissions.

Par « état fixé », il est entendu le fait que les permissions associées audit état servent à la définition de la liste de permissions.

Le module de gestion des permissions 44 est alors en relation avec les applications 36A, 36B, 36C et 36D de sorte à assurer la bonne application de la politique de sécurité.

La couche noyau 34 comprend un module de pilotage 60 chargé d'assurer la politique de sécurité actualisée suite à l'interception d'un événement 46.

Comme visible sur la figure 2, le module de gestion des permissions 44 ne reçoit pas de liste des permissions à appliquer depuis un élément de la couche applicative 32 mais de la couche noyau 34. En particulier, le module de gestion des permissions 44 reçoit la liste des permissions à appliquer depuis le module de pilotage 60 implémenté dans la couche noyau 34.

Le module de pilotage 60 est propre à recevoir une information d'actualisation depuis le module de décision 42.

En outre, lorsqu'une information d'actualisation est reçue, le module de pilotage 60 est propre à lire dans le registre 40 de sorte à générer une liste de permissions pour transmission au module de gestion des permissions 44.

En d'autres termes, lorsqu'un événement 46 est intercepté, l'information d'actualisation transmise au module de pilotage 60 indique que la politique de sécurité décrite dans le registre 40 a été mise à jour, le module de pilotage 60 étant alors adapté pour lire les différents ensembles de permissions dans ledit registre 40 pour transmission de la liste des permissions au module de gestion des permissions 44.

Le fonctionnement du dispositif 30 est maintenant décrit en référence à la mise en oeuvre d'un exemple de procédé de gestion de droits d'accès d'utilisateurs à base de rôles.

Pour faciliter la compréhension, il est considéré le rôle correspondant aux infirmières dans l'exemple de l'hôpital utilisé précédemment.

Initialement, le rôle 48 est activé à partir de l'ensemble de permissions correspondant à l'état 54-1.

L'état fixé est ainsi l'état 54-1.

De fait, le module gestion des permissions 44, qui a préalablement reçu une liste de permissions comprenant notamment l'ensemble de permissions correspondant à l'état 54-1, se charge de la bonne application de la politique de sécurité.

Selon l'exemple, le module gestion des permissions 44 assure que les infirmières puissent accéder aux informations administratives des patients.

Dans le procédé de gestion, le module d'interception d'événements 38 détecte un événement. L'événement est, par exemple, le passage d'une horloge interne au système d'information de la valeur 18h00 à 18h01.

Le module d'interception d'événements 38 envoie alors une donnée d'interception au module de décision 42 qui se charge d'actualiser le registre 40.

En particulier, le module de décision 42 effectue une transition de l'état 54-1 vers l'état 54-2.

A présent, l'état fixé n'est plus l'état 54-1 mais l'état 54-2.

En outre, le module de décision 42 génère une information d'actualisation qui est transmise au module de pilotage 60.

Le module de pilotage 60, après avoir reçu l'information d'actualisation, lit dans le registre 40 les différentes permissions décrites par les états des différentes machines à états finis. Ainsi, le module de pilotage 60 lit des permissions mises à jour suite à l'interception de l'événement.

Après avoir lu le registre 40, le module de pilotage 60 génère une liste de permissions qui est transmise au module de gestion des permissions 44.

Enfin, le module de gestion des permissions 44 applique les permissions décrites dans la liste de permissions, lesdites permissions étant alors mises à jour.

De fait, au passage de 18h00 à 18h01, les infirmières ne changent pas de rôle mais n'ont plus les mêmes permissions qu'initialement puisqu'elles n'ont plus le droit d'accéder à la base des données des patients.

Le dispositif 30 et le procédé précédemment décrits permettent de disposer d'un contrôle d'accès à base de rôles implémenté en mode noyau qui permet d'assurer une gestion événementielle des permissions. De fait, le dispositif 30 et le procédé permettent de disposer d'un modèle de contrôle d'accès à base de rôles adapté pour être implémenté en mode noyau, dans lequel la définition de l'évolution et le contrôle de cohérence de la politique de sécurité sont facilités par rapport aux systèmes existants.

En outre, la structure qui vient d'être décrite permet de facilement modifier la politique de sécurité.

En particulier, la présence de machines à états finis facilite grandement le travail de rédaction, d'évolution et de maintenance d'une politique de sécurité puisqu'il suffit pour ce faire, par exemple, de modifier ou de rajouter des états aux machines à états finis.

Le fait de disposer d'une séparation du dispositif 30 entre le noyau et la partie utilisateur offre, par ailleurs, une grande robustesse. De fait, le module de pilotage 60, qui est la partie sensible du dispositif 30 puisque le module de pilotage 60 est en charge de la génération de la liste de permissions à mettre en oeuvre, appartient au noyau. En revanche, les autres éléments et en particulier le registre 40, sont directement accessibles par un usager pour modification, pour autant que la politique de sécurité déjà en vigueur le permette.

## Revendications

1. Dispositif (30) de gestion des droits d'accès d'utilisateurs à base de rôles, le dispositif (30) comprenant :
- une couche applicative (32) comprenant :
+ des applications (36A, 36B, 36C et 36D),
+ un module d'interception d'événements (38) propre à intercepter des événements (46),
+ un registre (40) mémorisant des données définissant au moins un rôle (48) attribué à au moins un utilisateur du dispositif (30), chaque rôle (48) déterminant un ensemble de permissions (50A, 50B, 50C et 50D) associées à au moins une application (36A, 36B, 36C et 36D), le registre (40) étant propre à être actualisé pour mise à jour de permissions associées à des applications (36A), et
+ un module de décision (42) propre à recevoir les événements (46) interceptés par le module d'interception d'événements (38) pour, en fonction des événements (46) interceptés, actualiser le registre (40) et générer une information d'actualisation, et
- une couche noyau (34) distincte de la couche applicative (32) et comprenant un module de pilotage (60), le module de pilotage (60) étant propre à recevoir l'information d'actualisation et propre à lire le registre (40) alors actualisé pour générer une liste de permissions lorsqu'une information d'actualisation est reçue,
le dispositif (30) comprenant, en outre, un module de gestion des permissions (44) adapté pour recevoir une liste des permissions et pour appliquer les permissions de la liste des permissions lors de l'utilisation des applications par les utilisateurs.

2. Dispositif selon la revendication 1, dans lequel le module de gestion des permissions (44) est compris dans la couche applicative (46).

3. Dispositif selon la revendication 1 ou 2, dans lequel dans le registre (40), pour chaque rôle (48), chaque application (36A, 36B, 36C et 36D) d'un ensemble d'applications est associée à au moins un ensemble de permissions (50A, 50B, 50C et 50D).

4. Dispositif selon la revendication 3, dans lequel le registre (40) comprend, pour au moins une application (36A) de l'ensemble d'applications dans au moins un rôle (48), une machine à états finis (52), chaque état (54-1, 54-2, 54-3 et 54-4) correspondant à un ensemble de permissions.

5. Dispositif selon la revendication 4, dans lequel le module de décision (42) est propre à actualiser le registre (40) en effectuant au moins une transition entre états (54-1, 54-2) d'au moins une machine à états finis (52).

6. Dispositif selon la revendication 5, dans lequel dans le registre (40), à chaque instant et pour chaque rôle, un état pour chaque machine à états finis est fixé, la liste des permissions étant définie à partir de l'ensemble de permissions correspondant à un état fixé.

7. Dispositif selon l'une quelconque des revendications 1 à 6, dans lequel un événement (46) est choisi dans un groupe constitué :
- du respect de critères temporels,
- d'un effacement d'urgence,
- d'une configuration de sécurité,
- d'un défaut d'intégrité,
- de la détection d'une intrusion,
- de la détection d'un virus,
- de la bande passante disponible,
- du nombre d'utilisateurs connectés, et
- de la valeur d'au moins une ressource d'un système informatique.

8. Dispositif selon l'une quelconque des revendications 1 à 7, dans lequel la couche noyau (34) est destinée à être mise en oeuvre par un noyau de système d'exploitation de type UNIX.

9. Dispositif selon l'une quelconque des revendications 1 à 8, dans lequel le registre (40) définit une politique de sécurité, la politique de sécurité vérifiant un test probatoire de complétude.

10. Procédé de gestion des droits d'accès d'utilisateurs à base de rôles, le procédé étant mis en oeuvre par un dispositif (30) informatique comprenant une couche applicative (32) et une couche noyau (34) distincte de la couche applicative (32), le procédé comprenant les étapes suivantes :
- interception d'un événement (46) par un module d'interception d'événements (38) compris dans la couche applicative (32),
- actualisation, par un module de décision (42) compris dans la couche applicative (32), d'un registre (40) également compris dans la couche applicative (32) et génération d'une information d'actualisation, le registre (40) mémorisant des données définissant au moins un rôle attribué à au moins un utilisateur du dispositif (30), chaque rôle déterminant un ensemble de permissions associées à au moins une application, le registre (40) étant propre à être actualisé pour mise à jour de permissions associées à des applications,
- lorsqu'une information d'actualisation a été générée à l'étape précédente :
+ réception de l'information d'actualisation par un module de pilotage (60) compris dans la couche noyau (34), et lecture par le module de pilotage (60) du registre (40) alors actualisé pour génération d'une liste des permissions, et
+ réception de la liste des permissions par un module de gestion des permissions (44) pour application des permissions de la liste des permissions.

## Patentansprüche

1. Vorrichtung (30) zum Verwalten von Benutzerzugriffsrechten auf Rollenbasis, die Vorrichtung (30) aufweisend:
- eine Anwendungsschicht (32), aufweisend:
+ Anwendungen (36A, 36B, 36C und 36D),
+ ein Ereignisunterbrechungsmodul (38), das dazu eingerichtet ist, Ereignisse (46) zu unterbrechen,
+ ein Register (40), das Daten speichert, die mindestens eine Rolle (48) definieren, die mindestens einem Benutzer der Vorrichtung (30) zugeordnet ist, wobei jede Rolle (48) einen Satz von Berechtigungen (50A, 50B, 50C und 50D) festlegt, die mindestens einer Anwendung (36A, 36B, 36C und 36D) zugeordnet sind, wobei das Register (40) dazu eingerichtet ist, mit Anwendungen (36A) verbundenen Berechtigungen zu aktualisieren, und
+ ein Entscheidungsmodul (42), das dazu eingerichtet ist, die vom Ereignisunterbrechungsmodul (38) unterbrochenen Ereignisse (46) zu empfangen, um in Abhängigkeit von den unterbrochenen Ereignissen (46) das Register (40) zu aktualisieren und eine Aktualisierungsinformation zu erzeugen, und
- eine Kernschicht (34), die von der Anwendungsschicht (32) verschieden ist und ein Steuermodul (60) aufweist, wobei das Steuermodul (60) dazu eingerichtet ist, die Aktualisierungsinformation zu empfangen, und dazu eingerichtet ist, das dann aktualisierte Register (40) zum Erzeugen einer Liste von Berechtigungen auszulesen, wenn eine Aktualisierungsinformation empfangen wird,
wobei die Vorrichtung (30) ferner ein Berechtigungsverwaltungsmodul (44) aufweist, das zum Empfangen einer Liste von Berechtigungen und zum Anwenden der Berechtigungen aus der Liste von Berechtigungen bei Verwendung der Anwendungen mittels der Benutzer eingerichtet ist.

2. Vorrichtung gemäß Anspruch 1, wobei das Berechtigungsverwaltungsmodul (44) in der Anwendungsschicht (46) enthalten ist.

3. Vorrichtung gemäß Anspruch 1 oder 2, wobei in dem Register (40) für jede Rolle (48) jede Anwendung (36A, 36B, 36C und 36D) eines Satzes von Anwendungen mit mindestens einem Satz von Berechtigungen (50A, 50B, 50C und 50D) verknüpft ist.

4. Vorrichtung gemäß Anspruch 3, wobei das Register (40) für mindestens eine Anwendung (36A) des Satzes von Anwendungen in mindestens einer Rolle (48) einen endlichen Zustandsautomaten (52) aufweist, wobei jeder Zustand (54-1, 54-2, 54-3 und 54-4) einem Satz von Berechtigungen entspricht.

5. Vorrichtung gemäß Anspruch 4, wobei das Entscheidungsmodul (42) dazu eingerichtet ist, das Register (40) zu aktualisieren, indem mindestens ein Übergang zwischen Zuständen (54-1, 54-2) des mindestens einen endlichen Zustandsautomaten (52) durchgeführt wird.

6. Vorrichtung gemäß Anspruch 5, wobei in dem Register (40) für jeden Zeitpunkt und für jede Rolle ein Zustand für jeden endlichen Zustandsautomaten festgelegt wird, wobei die Liste der Berechtigungen ausgehend von dem Satz von Berechtigungen, der einem festgelegten Zustand entspricht, definiert ist.

7. Vorrichtung gemäß einem der Ansprüche 1 bis 6, wobei ein Ereignis (46) ausgewählt ist aus einer Gruppe bestehend aus:
- Einhaltung von Zeitkriterien,
- einer Notfall-Löschung,
- einer Sicherheitskonfiguration,
- einem Mangel an Integrität,
- dem Erkennen eines Eindringens,
- dem Nachweis eines Virus,
- der verfügbaren Bandbreite,
- der Anzahl von verbundenen Benutzern, und
- dem Wert von mindestens einer Ressource eines Computersystems.

8. Vorrichtung gemäß einem der Ansprüche 1 bis 7, wobei die Kernschicht (34) dazu vorgesehen ist, durch einen UNIX-Betriebssystemkern implementiert zu sein.

9. Vorrichtung gemäß einem der Ansprüche 1 bis 8, wobei das Register (40) eine Sicherheitspolitik definiert, wobei die Sicherheitspolitik einen Vollständigkeitsprobentest verifiziert.

10. Verfahren zur Verwaltung rollenbasierter Benutzerzugriffsrechte, wobei das Verfahren mittels einer Computervorrichtung (30) implementiert wird, die eine Anwendungsschicht (32) und eine von der Anwendungsschicht (32) verschiedene Kernschicht (34) aufweist, das Verfahren die folgenden Schritte aufweisend:
- Unterbrechen eines Ereignisses (46) mittels eines in der Anwendungsschicht (32) enthaltenen Ereignisunterbrechungsmoduls (38),
- Aktualisieren, mittels eines Entscheidungsmoduls (42), das in der Anwendungsschicht (32) enthalten ist, eines Registers (40), das ebenfalls in der Anwendungsschicht (32) enthalten ist, und Erzeugen einer Aktualisierungsinformation, wobei das Register (40) Daten speichert, die mindestens eine Rolle definieren, die mindestens einem Benutzer der Vorrichtung (30) zugeordnet ist, wobei jede Rolle einen Satz von Berechtigungen, die mindestens einer Anwendung zugeordnet sind, festlegt, wobei das Register (40) dazu eingerichtet ist, aktualisiert zu werden, um die mit Anwendungen verbundenen Berechtigungen zu aktualisieren,
- wenn im vorherigen Schritt eine Aktualisierungsinformation erzeugt wurde:
+ Empfangen der Aktualisierungsinformation mittels eines Steuermoduls (60), das in der Kernschicht (34) enthalten ist, und Lesen des dann aktualisierten Registers (40) mittels des Steuermoduls (60) zum Erzeugen einer Liste von Berechtigungen, und
+ Empfangen der Liste von Berechtigungen mittels eines Berechtigungsverwaltungsmoduls (44) zum Anwenden der Berechtigungen aus der Liste der Berechtigungen.

## Claims

1. Device (30) for role-based management of users' access rights, the device (30) comprising:
- an application layer (32) comprising:
+ applications (36A, 36B, 36C and 36D),
+ an event interception module (38) capable of intercepting events (46),
+ a register (40) storing data defining at least one role (48) attributed to at least one user of the device (30), each role (48) determining a set of permissions (50A, 50B, 50C and 50D) associated with at least one application (36A, 36B, 36C and 36D), the register (40) being capable of being updated in order to update permissions associated with applications (36A), and
+ a decision module (42) capable of receiving the events (46) intercepted by the event interception module (38) in order, as a function of the intercepted events (46), to update the register (40) and generate update information, and
- a kernel layer (34) which is separate from the application layer (32) and comprises a control module (60), the control module (60) being capable of receiving the update information and capable of reading the register (40) then updated in order to generate a list of permissions when update information is received,
the device (30) further comprising a permissions management module (44) adapted to receive a list of permissions and to apply the permissions of the list of permissions when the applications are used by the users.

2. Device according to claim 1, wherein the permissions management module (44) is included in the application layer (46).

3. Device according to claim 1 or 2, wherein in the register (40), for each role (48), each application (36A, 36B, 36C and 36D) of a set of applications is associated with at least one set of permissions (50A, 50B, 50C and 50D).

4. Device according to claim 3, wherein the register (40) comprises, for at least one application (36A) of the set of applications in at least one role (48), a finite state machine (52), each state (54-1, 54-2, 54-3 and 54-4) corresponding to a set of permissions.

5. Device according to claim 4, wherein the decision module (42) is capable of updating the register (40) by performing at least one transition between states (54-1, 54-2) of at least one finite state machine (52).

6. Device according to claim 5, wherein in the register (40), at each moment and for each role, a state for each finite state machine is fixed, the list of permissions being defined on the basis of the set of permissions corresponding to a fixed state.

7. Device according to any one of claims 1 to 6, wherein an event (46) is chosen from a group composed of:
- the observance of time criteria,
- an emergency erasure,
- a security configuration,
- an integrity fault,
- the detection of an intrusion,
- the detection of a virus,
- the available bandwidth,
- the number of users connected, and
- the value of at least one resource of a computer system.

8. Device according to any one of claims 1 to 7, wherein the kernel layer (34) is intended to be implemented by a UNIX-type operating system kernel.

9. Device according to any one of claims 1 to 8, wherein the register (40) defines a security policy, the security policy verifying a preliminary test of completeness.

10. Method for role-based management of users' access rights, the method being carried out by a computing device (30) comprising an application layer (32) and a kernel layer (34) which is separate from the application layer (32), the method comprising the following steps:
- interception of an event (46) by an event interception module (38) included in the application layer (32),
- updating, by a decision module (42) included in the application layer (32), of a register (40) which is also included in the application layer (32), and generation of update information, the register (40) storing data defining at least one role attributed to at least one user of the device (30), each role determining a set of permissions associated with at least one application, the register (40) being capable of being updated in order to update permissions associated with applications,
- when update information has been generated in the preceding step:
+ receiving of the update information by a control module (60) included in the kernel layer (34), and reading by the control module (60) of the register (40) then updated for the generation of a list of permissions, and
+ receiving of the list of permissions by a permissions management module (44) for application of the permissions of the list of permissions.
